# EUROPEAN PATENT APPLICATION

(11) **EP 4 811 467 A1**
(43) Date of publication of application: **23.09.2026**
(21) Application number: 26162560.2
(22) Date of filing: 05.03.2026
(51) Int. Cl.: H01M 4/92, H01M 4/86, H01M 4/88

(54) **MEMBRANE ELECTRODE ASSEMBLY**

(30) Priority: 21.03.2025 JP 2025047242
(71) Applicant: Toyota Jidosha Kabushiki Kaisha, Toyota-shi, Aichi-ken 471-8571 (JP); Kabushiki Kaisha Toyota Chuo Kenkyusho, Nagakute-shi, Aichi 480-1192 (JP)
(72) Inventor: TAKAHASHI, Shunsuke, Toyota-shi, 471-8571 (JP); SHIMIZU, Ryo, Toyota-shi, 471-8571 (JP); KIMURA, Masayuki, Toyota-shi, 471-8571 (JP); OKUBO, Keiichi, Toyota-shi, 471-8571 (JP); SHINOZAKI, Kazuma, Nagakute-shi, 480-1192 (JP); SHINOHARA, Akihiro, Nagakute-shi, 480-1192 (JP); KAMITAKA, Yuji, Nagakute-shi, 480-1192 (JP)
(74) Representative: Kuhnen & Wacker Patent- und Rechtsanwaltsbüro PartG mbB

(57) **Abstract**

The present disclosure provides a membrane electrode assembly that provides both high durability and high performance. The present disclosure relates to a membrane electrode assembly, wherein the membrane electrode assembly contains a nitrogen-containing multidentate ligand capable of coordinating to metal ions, a cathode catalyst layer includes an electrode catalyst and an ionomer, the electrode catalyst is a metal-supported catalyst in which metal particles having catalytic activity are supported on a support having pores, and an external-internal surface area ratio is 1.20 or less, or an external-internal particle count ratio is 0.70 or less.

## Description

### BACKGROUND

### Technical Field

The present disclosure relates to a membrane electrode assembly.

### Background Art

A polymer electrolyte fuel cell generally includes a membrane electrode assembly (also referred to as "MEA"). The membrane electrode assembly includes a polymer electrolyte membrane as an electrolyte membrane, an anode catalyst layer disposed on one surface of the polymer electrolyte membrane, and a cathode catalyst layer disposed on the other surface of the polymer electrolyte membrane. The anode catalyst layer functions as a fuel electrode, and the cathode catalyst layer functions as an air electrode. Gas diffusion layers are further disposed to both surfaces of the MEA in some cases, and this configuration is referred to as a membrane electrode & gas diffusion layer assembly (also referred to as "MEGA").

Here, there were cases in which a polymer electrolyte fuel cell was contaminated by metal ions during manufacture or power generation and an electrolyte membrane is deteriorated. In response to such a problem, US 9,172,107 B2 discloses that, by adding to an MEA a complex of a specific metal and a nitrogen-containing aromatic compound ligand, the durability of the MEA is improved.

### SUMMARY

As described above, in US 9,172,107 B2, by using a nitrogen-containing aromatic compound as a ligand, the MEA is made highly durable. However, in a technology such as that disclosed in US 9,172,107 B2, it has been found that there is a problem in that, due to the ligand, poisoning of the cathode catalyst occurs and the performance of a fuel cell decreases.

Accordingly, the present disclosure provides a membrane electrode assembly that provides both high durability and high performance.

The present inventors, as a result of intensive studies to solve the above problem, found that the reason for the above performance deterioration is that the ligands included in the anode catalyst layer and/or the electrolyte membrane migrate to the cathode catalyst layer and cause the poisoning of the cathode catalyst via the ionomer in the cathode catalyst layer. Accordingly, the present inventors conducted further studies and found that, by using a predetermined metal-supported catalyst as the electrode catalyst in the cathode catalyst layer, it is possible to reduce or prevent catalyst poisoning by a ligand and, as a result, it is possible to provide a membrane electrode assembly that provides both high durability and high performance, and thus arrived at the present disclosure.

Accordingly, aspect examples of this embodiment are as follows.
(1) A membrane electrode assembly comprising:
   a polymer electrolyte membrane;
   an anode catalyst layer disposed on one surface of the polymer electrolyte membrane; and
   a cathode catalyst layer disposed on the other surface of the polymer electrolyte membrane,
   wherein the membrane electrode assembly contains a nitrogen-containing multidentate ligand capable of coordinating to metal ions,
   wherein the cathode catalyst layer includes an electrode catalyst and an ionomer,
   wherein the electrode catalyst is a metal-supported catalyst in which metal particles having catalytic activity are supported on a support having pores, and
   wherein, when metal particles present on outermost surfaces of primary particles of the support are external particles, and metal particles present inside the outermost surfaces of the primary particles of the support are internal particles, a ratio of a total surface area of the external particles to a total surface area of the internal particles (total surface area of external particles/total surface area of internal particles) is 1.20 or less.
(2) A membrane electrode assembly comprising:
   a polymer electrolyte membrane;
   an anode catalyst layer disposed on one surface of the polymer electrolyte membrane; and
   a cathode catalyst layer disposed on the other surface of the polymer electrolyte membrane,
   wherein the membrane electrode assembly contains a nitrogen-containing multidentate ligand capable of coordinating to metal ions,
   wherein the cathode catalyst layer includes an electrode catalyst and an ionomer,
   wherein the electrode catalyst is a metal-supported catalyst in which metal particles having catalytic activity are supported on a support having pores, and
   wherein, when metal particles present on outermost surfaces of primary particles of the support are external particles, and metal particles present inside the outermost surfaces of the primary particles of the support are internal particles, a ratio of a total particle count of the external particles to a total particle count of the internal particles (total particle count of external particles/total particle count of internal particles) is 0.70 or less.
(3) The membrane electrode assembly according to (1),
   wherein a ratio of a total particle count of the external particles to a total particle count of the internal particles (total particle count of external particles/total particle count of internal particles) in the electrode catalyst is 0.70 or less.
(4) The membrane electrode assembly according to any one of (1) to (3),
   wherein the nitrogen-containing multidentate ligand capable of coordinating to the metal ions is at least one selected from compounds represented by the following general formulae (1) to (4) and salts thereof, 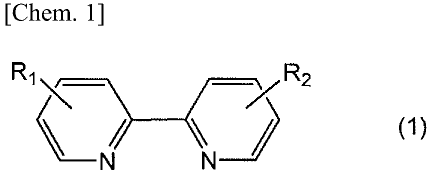 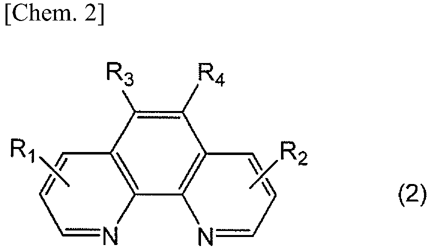 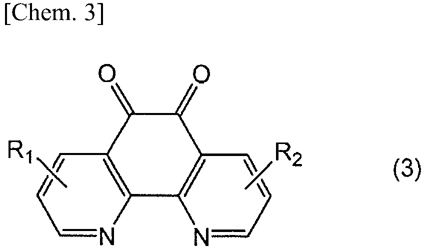 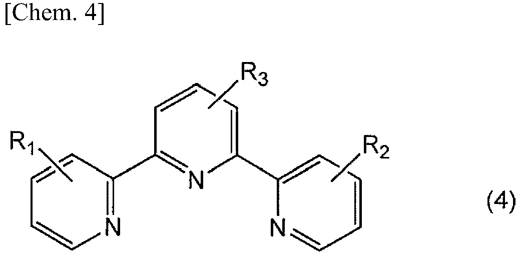
   wherein each of R¹, R², R³ and R⁴ is one functional group selected from a group of functional groups consisting of a hydrogen atom, a halogen atom, a nitrile group, an amido group, an imine group, an amino group, a thiol group, a hydroxyl group, a sulfo group, a carboxylic acid group, a phosphonic acid group, a phosphoric acid group, a ketone group, an aldehyde group, an ester group, an alkoxy group, a haloalkoxy group, a phenol group, a cyclopentyl group, a cyclohexyl group, an alkylamino group having 1 to 10 carbon atoms, an alkylsulfonic acid group having 1 to 10 carbon atoms, a haloalkyl group having 1 to 10 carbon atoms, an alkyl group having 1 to 10 carbon atoms, an alkenylamino group having 2 to 10 carbon atoms, an alkenylsulfonic acid group having 2 to 10 carbon atoms, a haloalkenyl group having 2 to 10 carbon atoms and an alkenyl group having 2 to 10 carbon atoms, and each of the functional groups optionally has, in a molecular chain, at least one selected from a group consisting of at least one functional group selected from the group of functional groups as defined above, an aromatic ring, a heterocyclic ring, an oxygen atom, a sulfur atom and a nitrogen atom.
(5) The membrane electrode assembly according to any one of (1) to (4),
   wherein the metal particles are at least one selected from a group consisting of platinum particles, platinum alloy particles, and composite particles containing platinum.

According to the present disclosure, it is possible to provide the membrane electrode assembly that provides both high durability and high performance.

### BRIEF DESCRIPTION OF THE DRAWINGS

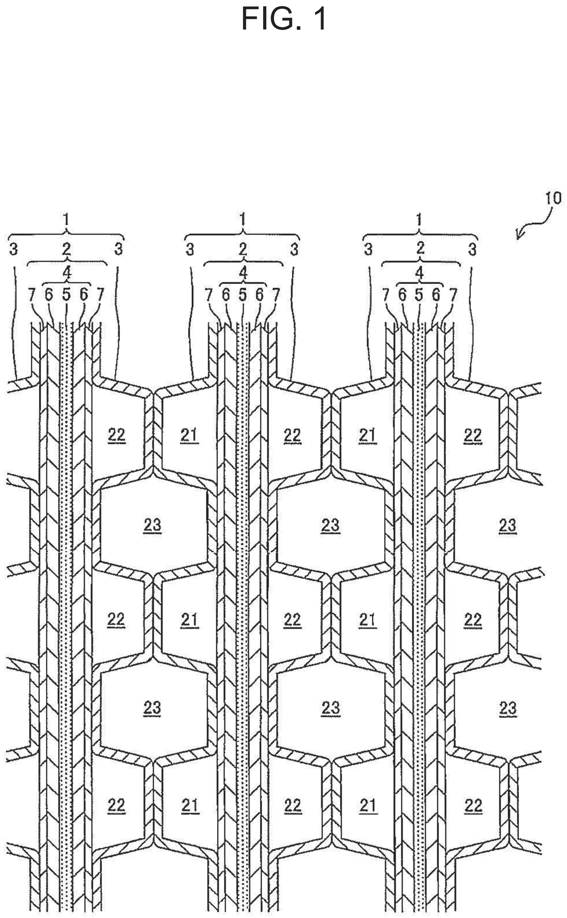

FIG. 1 is a schematic cross-sectional view for describing an exemplary configuration of a membrane electrode assembly and a polymer electrolyte fuel cell according to this embodiment, and is a cross-sectional view of a main part of a fuel cell 10 as an example;

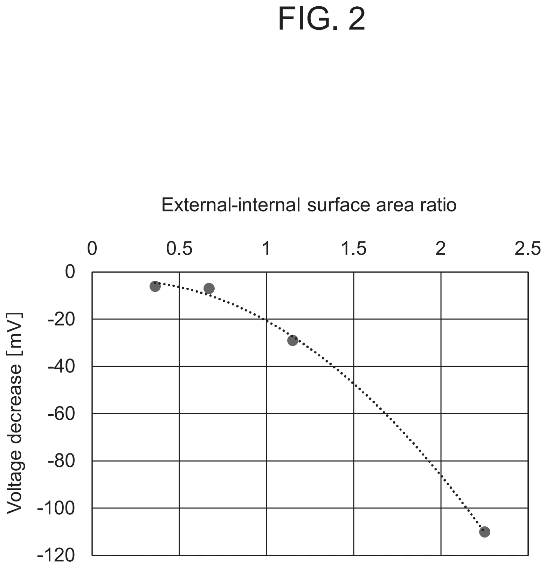

FIG. 2 is a graph showing, in membrane electrode assemblies to which a ligand was added (Comparative Example 2, Examples 1 to 3), a relationship between an external-internal surface area ratio of an electrode catalyst of a cathode catalyst layer and a voltage decrease due to addition of the ligand; and

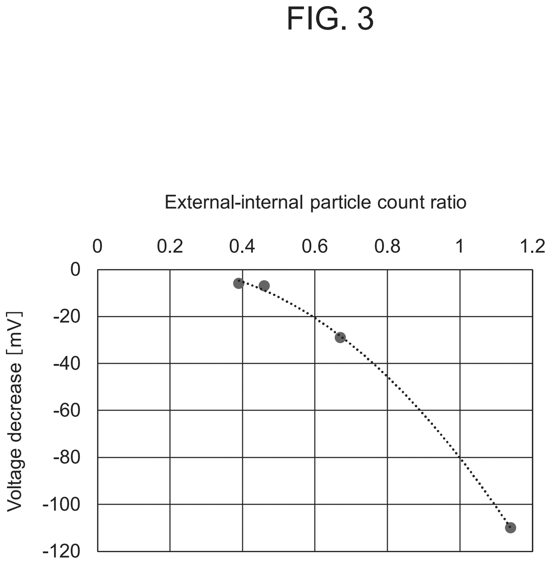

FIG. 3 is a graph showing, in membrane electrode assemblies to which a ligand was added (Comparative Example 2, Examples 1 to 3), a relationship between an external-internal particle count ratio of an electrode catalyst of a cathode catalyst layer and a voltage decrease due to addition of the ligand.

### DETAILED DESCRIPTION

The present disclosure relates to a membrane electrode assembly comprising: a polymer electrolyte membrane; an anode catalyst layer disposed on one surface of the polymer electrolyte membrane; and a cathode catalyst layer disposed on the other surface of the polymer electrolyte membrane. The membrane electrode assembly contains a nitrogen-containing multidentate ligand capable of coordinating to metal ions. The cathode catalyst layer includes an electrode catalyst and an ionomer. The electrode catalyst is a metal-supported catalyst in which metal particles having catalytic activity are supported on a support having pores.

In a first embodiment, when metal particles present on outermost surfaces of primary particles of the support are external particles, and metal particles present inside the outermost surfaces of the primary particles of the support are internal particles, a ratio of a total surface area of the external particles to a total surface area of the internal particles (total surface area of external particles/total surface area of internal particles) is 1.20 or less.

In a second embodiment, when metal particles present on outermost surfaces of primary particles of the support are external particles, and metal particles present inside the outermost surfaces of the primary particles of the support are internal particles, a ratio of a total particle count of the external particles to a total particle count of the internal particles (total particle count of external particles/total particle count of internal particles) is 0.70 or less.

Hereinafter, configurations of the first embodiment and the second embodiment (hereinafter, also referred to as "the embodiment") will be described.

A polymer electrolyte membrane has a function to block distribution of electrons and gases, and to move protons (H⁺) generated in an anode from an anode side catalyst layer to a cathode side catalyst layer. As the polymer electrolyte membrane in the embodiment, an electrolyte membrane having proton conductivity known in the technical field can be used. As the polymer electrolyte membrane, for example, a membrane formed of a fluororesin having sulfonate group as an electrolyte (Nafion (produced by DuPont), FLEMION (produced by AGC), Aciplex (produced by Asahi Kasei Corporation), and the like) can be used.

While the thickness of the polymer electrolyte membrane is not particularly limited, it is, for example, 5 µm to 50 µm from the aspect of improvement in proton conductivity.

The cathode catalyst layer functions as an air electrode (oxygen electrode). The cathode catalyst layer includes at least an electrode catalyst and an ionomer. In the embodiment, as the electrode catalyst in the cathode catalyst layer, a metal-supported catalyst is used in which metal particles having catalytic activity are supported on a support having pores. In the metal-supported catalyst, a catalyst metal in the form of particles is supported on the support. In the present disclosure, a state in which the catalyst metal is supported on the support having pores is a concept that includes at least one of a state in which the catalyst metal is supported on the surface of the support and a state in which the catalyst metal is supported on the inner wall surface inside the pores of the support.

As a method to support the metal particles on the support, a method that has been used conventionally can be adopted. Examples thereof include a method in which the metal particles having catalytic activity are mixed into a support dispersion in which the support has been dispersed, followed by filtration and washing, re-dispersion in ethanol or the like, and then drying with a vacuum pump or the like. After drying, heat treatment may be performed as necessary.

In the embodiment, a support having pores is used as the support. The support can be selected so that in the electrode catalyst, an external-internal surface area ratio or an external-internal particle count ratio is within a predetermined range.

In the embodiment, the electrode catalyst in the cathode catalyst layer is a metal-supported catalyst in which metal particles having catalytic activity are supported on a support having pores. When metal particles present on the outermost surfaces of the primary particles of the support are external particles, and metal particles present inside the outermost surfaces of the primary particles of the support are internal particles, requirement (1) or (2) below is satisfied, and both requirements (1) and (2) may be satisfied.
(1) The ratio of the total surface area of the external particles to the total surface area of the internal particles (total surface area of external particles/total surface area of internal particles) (also referred to as an external-internal surface area ratio) is 1.20 or less.
(2) The ratio of the total particle count of the external particles to the total particle count of the internal particles (total particle count of external particles/total particle count of internal particles) (also referred to as an external-internal particle count ratio) is 0.70 or less.

Examples of methods for measuring positions where the metal particles supported on the support are present include an observation method using an electron microscope. By gradually changing the observation angle of an electrode catalyst to be measured, taking a plurality of images, and reconstructing them, an object can be photographed three-dimensionally. Centroid coordinates of the metal particles are determined three-dimensionally, and the metal particles positioned on the outermost surfaces of the primary particles of the support are determined as the external particles, and the metal particles positioned inside the outermost surfaces are determined as the internal particles. When particles to be evaluated are selected, the following procedure may be satisfied so that no variation appears.

The count of particles to be evaluated is, for example, 100 or more, 200 or more in some embodiments, and may be 1000 or more. In some embodiments, the particles to be evaluated are selected from at least two (in some embodiments, five or more) visual fields, and they are selected so that the count of particles selected from each visual field is equal in each visual field.

In the electrode catalyst in the cathode catalyst layer of the first embodiment, the ratio of the total surface area of the external particles to the total surface area of the internal particles (total surface area of external particles/total surface area of internal particles) is 1.20 or less, as described above. As a countermeasure to the problem that the nitrogen-containing multidentate ligand that has migrated from the anode catalyst layer to the cathode catalyst layer causes poisoning of the cathode catalyst via the ionomer in the cathode catalyst layer and decreases power generation performance, it is effective to support the metal particles (catalyst metal) inside the support so as not to contact the ionomer. When the external-internal surface area ratio is 1.20 or less, in the cathode catalyst layer, the catalyst poisoning due to the nitrogen-containing multidentate ligand is less likely to occur, and a decrease in the power generation performance due to the ligand addition is reduced or prevented. The external-internal surface area ratio is 1.15 or less in some embodiments, and 0.70 or less in some embodiments. When the external-internal surface area ratio is within this range, the decrease in the power generation performance due to the ligand addition is more reduced or prevented.

In the electrode catalyst in the cathode catalyst layer of the second embodiment, the ratio of the total particle count of the external particles to the total particle count of the internal particles (total particle count of external particles/total particle count of internal particles) is 0.70 or less, as described above. As a countermeasure to the problem that the nitrogen-containing multidentate ligand that has migrated from the anode catalyst layer to the cathode catalyst layer causes poisoning of the cathode catalyst via the ionomer in the cathode catalyst layer and decreases power generation performance, it is effective to support the metal particles (catalyst metal) inside the support so as not to contact the ionomer. When the external-internal particle count ratio is 0.70 or less, in the cathode catalyst layer, the catalyst poisoning due to the nitrogen-containing multidentate ligand is less likely to occur, and a decrease in the power generation performance due to the ligand addition is reduced or prevented. The external-internal particle count ratio is 0.67 or less in some embodiments, and 0.50 or less in some embodiments. When the external-internal particle count ratio is within this range, the decrease in the power generation performance due to the ligand addition is more reduced or prevented.

In one embodiment, the electrode catalyst in the cathode catalyst layer may be provided with both the external-internal surface area ratio of the first embodiment and the external-internal particle count ratio of the second embodiment. That is, in one embodiment, the electrode catalyst in the cathode catalyst layer has an external-internal surface area ratio of 1.20 or less and an external-internal particle count ratio of 0.70 or less. When the external-internal surface area ratio and the external-internal particle count ratio are within these ranges, the decrease in the power generation performance due to the ligand addition is reduced or prevented.

The total particle count of the internal particles and the total particle count of the external particles can be calculated using the above-described observation method using an electron microscope or other methods.

The method for evaluating the total surface area of particles is as follows. A particle size (r) of a measured particle is defined as the maximum diameter. The surface area is calculated for each measured particle, and the total surface area is obtained by adding up all the surface areas. A spherical model is used for calculating a surface area (S), where S = 2π(r/2)². The surface area calculated for each particle is aggregated individually for the external particles and the internal particles into the total surface area of the external particles and the total surface area of the internal particles, respectively.

The support is not particularly limited, but examples include carbon or oxides and the like. As the carbon, it may be carbon having electron conductivity. For the support, one kind may be used alone, or two or more kinds may be used in combination.

Examples of the carbon support include carbon black (acetylene black, Ketjen black, or furnace black, or the like), activated carbon, graphite, glassy carbon, graphene, carbon fiber, carbon nanotube, nitrided carbon, sulfurized carbon, or phosphorized carbon, and the like. For the carbon support, one kind may be used alone, or two or more kinds may be used in combination.

Examples of the oxide support include titanium oxide, niobium oxide, tin oxide, tungsten oxide, or molybdenum oxide and the like. For the oxide support, one kind may be used alone, or two or more kinds may be used in combination.

When the support includes primary particles having pores, it may include secondary particles formed by aggregation of the primary particles having pores. In the embodiment, a hole present in a primary particle, whose diameter is 1 nm to 300 nm and whose depth from the outermost surface of the primary particle is 1 nm or more, is defined as a pore. A primary particle is the smallest unit of the support particles that cannot be decomposed.

The average particle size of the primary particles of the support may be, for example, from 5 nm to 3000 nm. The average particle size of primary particles of the support may be 50 nm to 2000 nm, and is 100 nm to 1500 nm in some embodiments. The particle size is a particle size calculated as a sphere-equivalent diameter from the volume of particles in a transmission electron micrograph. As for the average particle size, measurement of the particle size (sphere-equivalent diameter) for 100 to 1000 support particles is performed by a transmission electron microscope, and the average value thereof may be used as the average particle size of the support particles.

The catalyst metal is not particularly limited as long as it exhibits the catalytic activity in the reaction at the electrode.
Air electrode (cathode): O₂ + 4H⁺ + 4e⁻ → 2H₂O
Hydrogen electrode (anode): 2H₂ → 4H⁺ + 4e⁻

The metal particles may be any metal having oxygen reduction catalytic ability. Examples of the metal particles include metals such as platinum, ruthenium, iridium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium, and two or more of these metals may be used. The metal particles are at least one selected from the group consisting of platinum particles, platinum alloy particles, and composite particles containing platinum in some embodiments. Metals other than platinum contained in platinum alloys and in composite particles containing platinum include, for example, ruthenium, iridium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium. These metals may be used as one kind alone or in a combination of two or more kinds.

The average particle size of the metal particles is not particularly limited, but is 1 nm to 10 nm in some embodiments, and, for example, 1 nm to 4 nm or 2 nm to 3 nm. The particle size is a particle size calculated as a sphere-equivalent diameter from the volume of particles in the transmission electron micrograph. As for the average particle size, the measurement of the particle size (sphere-equivalent diameter) for 100 to 1000 particles is carried out using the transmission electron microscope, and the average value thereof may be used as the average particle size of the metal particles.

The metal supporting ratio of the metal particles supported on the support is not particularly limited, but is, for example, 1% by mass to 50% by mass, and is 29% by mass to 48% by mass in some embodiments.

While the content of the electrode catalyst in the cathode catalyst layer is not particularly limited, for example, the content is 3% by mass to 40% by mass of the total mass of the catalyst layer.

The ionomer used for the cathode catalyst layer is an ionomer having sulfonate groups in some embodiments. The ionomer is also referred to as a cation-exchange resin, and exists as a cluster formed of ionomer molecules. The ionomer is not specifically limited, and, for example, the ionomer known in the technical field can be used. Examples of the ionomer include: fluororesin-based ionomer, such as perfluorosulfonic acid resin; sulfonated plastic-based ionomer, such as sulfonated polyether ketone, sulfonated polyethersulfone, sulfonated polyether ether sulfone, sulfonated polysulfone, sulfonated polysulfide, and sulfonated polyphenylene; and sulfoalkylated plastic-based ionomer, such as sulfoalkylated polyether ether ketone, sulfoalkylated polyethersulfone, sulfoalkylated polyetherethersulfone, sulfoalkylated polysulfone, sulfoalkylated polysulfide, and sulfoalkylated polyphenylene. For the ionomer, one kind may be used alone, or two or more kinds may be used in combination.

The anode catalyst layer functions as the fuel electrode, that is, the hydrogen electrode.

The anode catalyst layer includes the electrode catalyst and the electrolyte such as an ionomer. The ionomer is an ionomer having a sulfonate group in some embodiments. Examples of the ionomer having a sulfonate group include those described above. In one embodiment, the anode catalyst layer may include, in addition to the electrode catalyst and the ionomer, the nitrogen-containing multidentate ligand capable of coordinating to the metal ions.

While the electrode catalyst is not particularly limited, for example, the above-described materials can be used.

While the ionomer having the sulfonate group is not specifically limited, examples thereof include a polymer electrolyte resin having ionic conductivity, such as a perfluorosulfonic acid ionomer. Specific examples of the ionomer having the sulfonate group include Nafion and Aquivion (Solvay S.A.).

The membrane electrode assembly according to the embodiment includes the nitrogen-containing multidentate ligand capable of coordinating to the metal ions. The membrane electrode assembly is contaminated by metal ions during manufacture of the membrane electrode assembly, during manufacture of a fuel cell, during the power generation, and the like, and the membrane electrode assembly is deteriorated. By coordinating to the metal ions, the nitrogen-containing multidentate ligand can reduce or prevent the adverse effects of the metal ions and can improve the durability of the membrane electrode assembly. As the metal ions that the nitrogen-containing multidentate ligand is capable of coordinating to, there are no particular limitations; for example, manganese ions, cerium ions, cobalt ions, iron ions, copper ions, palladium ions, platinum ions, and the like may be exemplified. In one embodiment, the metal ions are iron ions.

The nitrogen-containing multidentate ligand is a compound that contains a nitrogen atom and has two or more coordination sites. Here, the "coordination site" refers to an atom or an atom group having an unshared electron pair that can form a coordination bond with the metal ions. As the coordination site, for example, a hetero atom (a nitrogen atom, an oxygen atom, a sulfur atom, a phosphorus atom, and the like) and an atom group containing the hetero atom, and the like, can be exemplified. The nitrogen-containing multidentate ligand is, for example, a nitrogen-containing aromatic compound having two or more nitrogen atoms, and may be a compound having two or more pyridine rings or a derivative thereof. As compounds having two or more pyridine rings, for example, bipyridine, phenanthroline, phenanthroline dione, terpyridine, and the like can be exemplified.

The nitrogen-containing multidentate ligand may be in the form of a salt. When the nitrogen-containing multidentate ligand is in the form of a salt, the salt is not particularly limited, but, for example, halides, sulfates, nitrates, phosphates, borates, silicates, carbonates, bicarbonates, organic acid salts, and the like can be mentioned. For the salt, one kind may be used alone, or two or more kinds may be used in combination.

In one embodiment, the nitrogen-containing multidentate ligand is at least one selected from compounds represented by the following general formulae (1) to (4) and salts thereof, 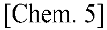 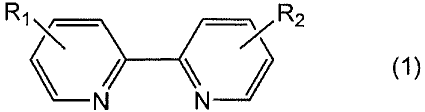 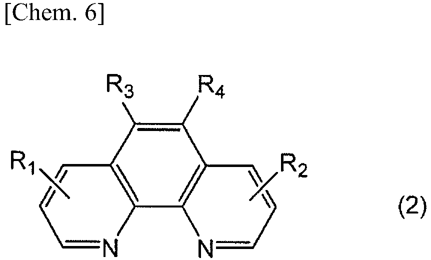 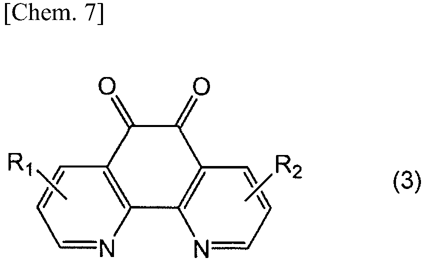 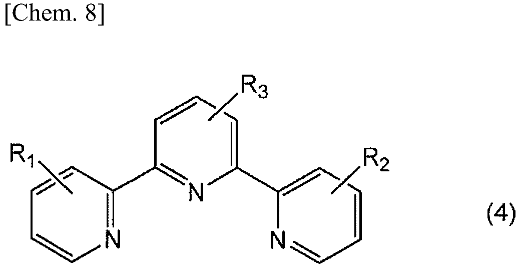 wherein each of R¹, R², R³ and R⁴ is one functional group selected from a group of functional groups consisting of a hydrogen atom, a halogen atom, a nitrile group, an amido group, an imine group, an amino group, a thiol group, a hydroxyl group, a sulfo group, a carboxylic acid group, a phosphonic acid group, a phosphoric acid group, a ketone group, an aldehyde group, an ester group, an alkoxy group, a haloalkoxy group, a phenol group, a cyclopentyl group, a cyclohexyl group, an alkylamino group having 1 to 10 carbon atoms, an alkylsulfonic acid group having 1 to 10 carbon atoms, a haloalkyl group having 1 to 10 carbon atoms, an alkyl group having 1 to 10 carbon atoms, an alkenylamino group having 2 to 10 carbon atoms, an alkenylsulfonic acid group having 2 to 10 carbon atoms, a haloalkenyl group having 2 to 10 carbon atoms and an alkenyl group having 2 to 10 carbon atoms, and each of the functional groups optionally has, in a molecular chain, at least one selected from a group consisting of at least one functional group selected from the group of functional groups as defined above, an aromatic ring, a heterocyclic ring, an oxygen atom, a sulfur atom and a nitrogen atom.

In Formulae (1) to (4), R¹, R², R³, and R⁴ are present at positions capable of forming a covalent bond with a carbon atom of the pyridine ring. In Formulae (1) to (4), nitrogen in the pyridine ring is not substituted by any of R¹, R², R³, and R⁴.

In one embodiment, each of R¹, R², R³, and R⁴ in Formulae (1) to (4) is a hydrogen atom or an alkyl group having 1 to 10 carbon atoms, and is a hydrogen atom in some embodiments.

In one embodiment, the nitrogen-containing multidentate ligand is 1,10-phenanthroline.

The nitrogen-containing multidentate ligand can be contained in the anode catalyst layer, the polymer electrolyte membrane, or both.

When the anode catalyst layer contains the nitrogen-containing multidentate ligand, the anode catalyst layer contains at least the electrode catalyst, the electrolyte, and the nitrogen-containing multidentate ligand.

The content of a nitrogen-containing multidentate ligand in an anode catalyst layer, relative to the total amount of solids of the anode catalyst layer, may be 0.1% by mass to 10% by mass, and is 0.5% by mass to 5% by mass in some embodiments.

### [Method for Manufacturing Membrane Electrode Assembly]

The catalyst layer can be formed by, for example, a step of preparing a catalyst ink (for example, a solid content concentration of about 10%) including an electrode catalyst, an ionomer, and a solvent, a step of applying the catalyst ink on a substrate surface and volatilizing the solvent in a coating film to form a catalyst layer on the substrate surface, and a step of transferring the catalyst layer on the substrate surface to an electrolyte membrane. Additionally, the catalyst layer can also be formed by a method of directly applying the catalyst ink on the polymer electrolyte membrane instead of the substrate. Formation of the cathode catalyst layer and the anode catalyst layer on the polymer electrolyte membrane allows producing the membrane electrode assembly.

Examples of a method for applying the catalyst ink include, for example, a spray method, a blade coating method using a doctor blade or an applicator, a die coating method, a reverse roll coater method, and an intermittent die coating method.

In forming the anode catalyst layer, the above-described nitrogen-containing multidentate ligand may be contained in the catalyst ink for forming the anode catalyst layer. Specifically, the catalyst ink for forming the anode catalyst layer may contain an electrode catalyst, an ionomer (for example, an ionomer having a sulfonate group), the above-described nitrogen-containing multidentate ligand, and a solvent.

### [Specific Configurations of Membrane Electrode Assembly and Polymer Electrolyte Fuel Cell]

A basic unit of the polymer electrolyte fuel cell is a membrane electrode assembly (MEA) in which the catalyst layers (electrodes) are assembled to both surfaces of the polymer electrolyte membrane. Additionally, in the polymer electrolyte fuel cell, gas diffusion layers are generally disposed outside the catalyst layer. The gas diffusion layers are for supplying a reaction gas and electrons to the catalyst layers, and carbon paper, carbon cloth, and the like are used. The catalyst layer is a part serving as a reaction field of the electrode reaction.

The following describes the configurations of the membrane electrode assembly and the polymer electrolyte fuel cell with reference to FIG. 1. FIG. 1 is a schematic cross-sectional view for describing an exemplary configuration of the polymer electrolyte fuel cell according to the embodiment and a cross-sectional view of a main part of a fuel cell 10 as an example. The polymer electrolyte fuel cell includes a stacked body of the unit cells constituted of an electricity generating body and fuel cell separators disposed on both surfaces of the electricity generating body. A plurality of the unit cells are stacked in the stacking direction, and the respective unit cells are electrically connected in series. As illustrated in FIG. 1, in the fuel cell 10, the plurality of unit cells 1 as the basic units are stacked. Each of the unit cells 1 is a polymer electrolyte fuel cell that generates an electromotive force by electrochemical reaction between oxidant gas (for example, air) and a fuel gas (for example, hydrogen). The unit cell 1 includes a membrane electrode & gas diffusion layer assembly (MEGA) 2 and separators 3 in contact with the MEGA 2 so as to partition the MEGA 2. On both sides of the MEGA 2, gas diffusion layers (GDL) 7 are disposed. In this embodiment, the MEGA 2 is sandwiched by a pair of the separators 3, 3.

The MEGA 2 includes a membrane electrode assembly (MEA) 4 and the gas diffusion layers 7, 7 disposed on both surfaces of the membrane electrode assembly 4. The membrane electrode assembly 4 is constituted of an electrolyte membrane 5 and a pair of electrodes 6, 6 assembled to sandwich the electrolyte membrane 5. The electrolyte membrane 5 is, for example, a proton-conductive ion exchange membrane formed of a polymer material. The electrode 6 includes, for example, a porous carbon material supporting a catalyst, such as platinum. The electrode 6 disposed on one side of the electrolyte membrane 5 functions as the anode, and the electrode 6 on the other side functions as the cathode. The gas diffusion layer 7 is formed of a conductive member having gas permeability. Examples of the conductive member having gas permeability include, for example, a carbon porous body, such as carbon paper or carbon cloth, or a metal porous body, such as metal mesh or foam metal. In this embodiment, the anode electrode is constituted of the anode catalyst layer, and the cathode electrode is formed of the cathode catalyst layer.

### Examples

The following describes the embodiment using examples.

### <Production of Electrode Catalyst>

### (Electrode Catalyst A)

Electrode catalyst A including platinum (Pt) particles as a catalyst metal and carbon black (VULCAN, manufactured by Cabot) as the support that supports the platinum (Pt) particles was prepared (metal supporting ratio: 36% by mass). Regarding electrode catalyst A, in a measurement by the N₂ adsorption-desorption method, the peak pore diameter of the support was 11.5 nm, the pore volume of 2 nm to 30 nm mesopores of the support was 1.9 cc/g, and the BET specific surface area of the support was 159.0 m²/g. The external-internal surface area ratio and the external-internal particle count ratio of electrode catalyst A were calculated using the above-described methods and resulted in 2.25 and 1.14, respectively. As an analyzer, a transmission electron microscope (Transmission Electron Microtomography) (3D-TEM) was used, and specifically, the following method was employed. Using a TEM (JEM-z2500) manufactured by JEOL Ltd, a projected image (TEM image) of a sample was taken while continuously inclining the sample, and based on the projected image (TEM image), a three-dimensional image was reconstructed by computed tomography (CT) to analyze the detailed structures of materials.

### (Electrode Catalyst B)

Electrode catalyst B including platinum (Pt) particles (average particle size: 2 nm to 3 nm) as a catalyst metal and carbon black as the support that supports the platinum (Pt) particles was prepared (metal supporting ratio: 29% by mass). The external-internal surface area ratio and the external-internal particle count ratio of electrode catalyst B were calculated using the above-described methods and resulted in 1.15 and 0.67, respectively.

### (Electrode Catalyst C)

Electrode catalyst C including platinum (Pt) particles as a catalyst metal and Ketjen black (EC300J, manufactured by Lion Specialty Chemicals Co., Ltd.) as the support supporting the platinum (Pt) particles was prepared (metal supporting ratio: 42% by mass). Regarding electrode catalyst C, in a measurement by the N₂ adsorption-desorption method, the peak pore diameter of the support was 5.4 nm, the pore volume of 2 nm to 30 nm mesopores of the support was 10.5 cc/g, and the BET specific surface area of the support was 458.0 m²/g. The external-internal surface area ratio and the external-internal particle count ratio of electrode catalyst C were calculated using the above-described methods and resulted in 0.67 and 0.46, respectively.

### (Electrode Catalyst D)

Electrode catalyst D including platinum (Pt) particles as a catalyst metal and carbon black as the support that supports the platinum (Pt) particles was prepared (metal supporting ratio: 48% by mass). Regarding electrode catalyst D, in a measurement by the N₂ adsorption-desorption method, the peak pore diameter of the support was 3.5 nm, the pore volume of 2 nm to 30 nm mesopores of the support was 14.0 cc/g, and the BET specific surface area of the support was 708.0 m²/g. The external-internal surface area ratio and the external-internal particle count ratio of electrode catalyst D were calculated using the above-described methods and resulted in 0.36 and 0.39, respectively.

### <Production of Membrane Electrode Assembly>

### [Comparative Example 1]

### (Formation of Cathode Catalyst Layer)

Electrode catalyst A was dispersed in an ionomer solution (DE2020) containing water, ethanol, and Nafion (registered trademark), and prepared a catalyst ink. The mass ratio of water to alcohol (water/alcohol) in the catalyst ink was set to about 1. The catalyst ink was coated on a polytetrafluoroethylene sheet and dried to form a cathode catalyst layer.

The Pt weight per unit area of the cathode catalyst layer was set to 0.3 mg/cm², and the mass ratio (I/C) of the ionomer to the support was set to 1.0.

### (Formation of Anode Catalyst Layer)

An aqueous solution of iron nitrate was added to the ionomer solution (DE2020), and an ionomer solution containing iron nitrate and Nafion (registered trademark) was prepared.

As the electrode catalyst, a catalyst in which platinum is supported on carbon (TEC10E30E, carbon that supports 30% platinum, manufactured by Tanaka Kikinzoku Kogyo Co., Ltd.) was used. The electrode catalyst was caused to be dispersed in the prepared ionomer solution, and the catalyst ink was prepared. The catalyst ink was coated on a polytetrafluoroethylene sheet and dried to form an anode catalyst layer.

The Pt weight per unit area of the anode catalyst layer was set to 0.1 mg/cm². The amount of iron ions to be added was set to 1.0 µg/cm². The mass ratio of ionomer to carbon (I/C) was 1.0.

### (Production of Membrane Electrode Assembly)

Each of the obtained cathode catalyst layer and anode catalyst layer was heat-transferred on both surfaces of a Nafion (registered trademark) membrane (NR211) to produce membrane electrode assembly C1. Heat transfer conditions were set to 140°C, 50 kgf/cm² (4.90 MPa), and 5 min. The electrode area of the membrane electrode assembly for the initial performance test and the durability test was set to 3.6 cm × 3.6 cm (12.96 cm²). The membrane electrode assembly was sandwiched by paper diffusion layers (GDL) with water-repellent layers to produce a test cell.

### [Comparative Example 2]

In forming an anode catalyst layer, except that the ionomer solution containing iron nitrate and Nafion (registered trademark) was changed to an ionomer solution containing 1,10-phenanthroline, iron nitrate, and Nafion (registered trademark), in the same manner as Comparative Example 1, membrane electrode assembly C2 was prepared. The amount to be added of 1,10-phenanthroline to the anode catalyst layer was set to 9 µg/cm².

### [Comparative Example 3]

Except that electrode catalyst B was used as the electrode catalyst of the cathode catalyst layer, membrane electrode assembly C3 was prepared in the same manner as Comparative Example 1.

### [Comparative Example 4]

Except that electrode catalyst C was used as the electrode catalyst of the cathode catalyst layer, membrane electrode assembly C4 was prepared in the same manner as Comparative Example 1.

### [Comparative Example 5]

Except that electrode catalyst D was used as the electrode catalyst of the cathode catalyst layer, membrane electrode assembly C5 was prepared in the same manner as Comparative Example 1.

### [Example 1]

Except that electrode catalyst B was used as the electrode catalyst of the cathode catalyst layer, membrane electrode assembly E1 was prepared in the same manner as Comparative Example 2.

### [Example 2]

Except that electrode catalyst C was used as the electrode catalyst of the cathode catalyst layer, membrane electrode assembly E2 was prepared in the same manner as Comparative Example 2.

### [Example 3]

Except that electrode catalyst D was used as the electrode catalyst of the cathode catalyst layer, membrane electrode assembly E3 was prepared in the same manner as Comparative Example 2.

### <Evaluation>

### (Initial Performance Test)

Using the above test cell (electrode area: 12.96 cm²), cell evaluation was conducted. Under a low-humidification condition (cell temperature 95°C, humidity 30% RH), the evaluation of current-voltage properties was conducted, and the measurement of the performance (voltage) at 1.0 A/cm² was conducted. The sweep rate in the evaluation of current-voltage properties was set to 20 mA/s, and the current-voltage properties were obtained by an anode sweep. Further, the cell pressure was set to 150 kPa, the anode gas type was set to hydrogen, the anode gas flow rate was set to 1.0 L/min, the cathode gas species was set to air, and the cathode gas flow rate was set to 2.0 L/min. The results are shown in Table 1.

In addition, for the case using 1,10-phenanthroline (ligand) (Comparative Example 2, Examples 1 to 3), the voltage decrease due to addition of the ligand was calculated as the difference in the initial voltage from that in the case where the ligand was not added. The results are shown in Table 1.

### (Durability Test)

Using the above test cell (electrode area: 12.96 cm²), a 144-hour durability test was conducted under a low-humidification environment (cell temperature 95°C, humidity 30% RH) and a low current density (0.2 A/cm²) in which deterioration of an electrolyte membrane readily occurs. The cell pressure was set to 150 kPa, the anode gas type was set to hydrogen, the anode gas flow rate was set to 1.0 L/min, the cathode gas species was set to air, and the cathode gas flow rate was set to 2.0 L/min. After the durability test, hydrogen and air were supplied, and the measurement of performance (voltage) at a current density of 1.0 A/cm² under the conditions of the above initial performance test was performed. The voltage retention rate of the cell voltages after the durability test relative to the initial cell voltages (voltage after the durability test / initial voltage × 100 (%)) was calculated. The results are shown in Table 1.

**[Table 1]**

| | | Comp. Ex. 1 | Comp. Ex. 2 | Comp. Ex. 3 | Ex. 1 | Comp. Ex. 4 | Ex. 2 | Comp. Ex. 5 | Ex. 3 |
|---|---|---|---|---|---|---|---|---|---|
| Anode catalyst layer | 1,10-phenanthroline | Not added | Added | Not added | Added | Not added | Added | Not added | Added |
| Cathode catalyst layer | Electrode catalyst | Catalyst A | Catalyst A | Catalyst B | Catalyst B | Catalyst C | Catalyst C | Catalyst D | Catalyst D |
| | External-internal surface area ratio | 2.25 | 2.25 | 1.15 | 1.15 | 0.67 | 0.67 | 0.36 | 0.36 |
| | External-internal particle count ratio | 1.14 | 1.14 | 0.67 | 0.67 | 0.46 | 0.46 | 0.39 | 0.39 |
| Initial performance test | Voltage (mV) | 640 | 530 | 644 | 615 | 649 | 642 | 655 | 649 |
| | Voltage decrease (mV) | | -110 | | -29 | | -7 | | -6 |
| Durability test | Voltage (mV) | 489 | 501 | 512 | 579 | 486 | 630 | 486 | 632 |
| | Voltage retention rate | 76.4% | 94.5% | 79.5% | 94.1% | 74.9% | 98.1% | 74.2% | 97.4% |

| | | | | | | | | | |
|---|---|---|---|---|---|---|---|---|---|
| Comp. Ex.: Comparative Example Ex.: Example | | | | | | | | | |

FIG. 2 shows, in the membrane electrode assemblies to which the ligand was added (Comparative Example 2, Examples 1 to 3), the relationship between the external-internal surface area ratio of the electrode catalyst of the cathode catalyst layer and the voltage decrease due to addition of the ligand. FIG. 3 shows, in the membrane electrode assemblies to which the ligand was added (Comparative Example 2, Examples 1 to 3), the relationship between the external-internal particle count ratio of the electrode catalyst of the cathode catalyst layer and the voltage decrease due to addition of the ligand.

As shown in Table 1, when the ligand (1,10-phenanthroline) was added, compared with the cases where the ligand was not added, the voltage retention rate after the durability test was improved, and the durability was improved. However, on the other hand, when the ligand was added, compared with the cases where the ligand was not added, the initial voltage was lower.

As shown in Table 1 and FIG. 2, in the membrane electrode assemblies to which the ligand was added, the lower the external-internal surface area ratio was, the smaller the decrease in the initial voltage due to the ligand addition was. And, in the membrane electrode assemblies of Examples 1 to 3 in which the external-internal surface area ratio is 1.20 or less, as compared with the membrane electrode assembly of Comparative Example 2 in which the external-internal surface area ratio is outside this range, the decrease in the initial voltage due to the ligand addition was reduced or prevented to a significantly greater extent.

Further, as shown in Table 1 and FIG. 3, in the membrane electrode assemblies to which the ligand was added, the lower the external-internal particle count ratio was, the smaller the decrease in the initial voltage due to the ligand addition was. And, in the membrane electrode assemblies of Examples 1 to 3 in which the external-internal particle count ratio is 0.70 or less, as compared with the membrane electrode assembly of Comparative Example 2 in which the external-internal particle count ratio is outside this range, the decrease in the initial voltage due to the ligand addition was reduced or prevented to a significantly greater extent.

Upper limit values and/or lower limit values of respective numerical ranges described in this specification can be appropriately combined to specify an appropriate range. For example, upper limit values and lower limit values of the numerical ranges can be appropriately combined to specify an appropriate range, upper limit values of the numerical ranges can be appropriately combined to specify an appropriate range, and lower limit values of the numerical ranges can be appropriately combined to specify an appropriate range.

While the embodiment has been described in detail, the specific configuration is not limited to the embodiment. Design changes within a scope not departing from the gist of the present disclosure are included in the present disclosure.

### DESCRIPTION OF SYMBOLS

- 1: Cell
- 2: Membrane electrode & gas diffusion layer assembly (MEGA)
- 3: Separator for fuel cell (Separator)
- 4: Membrane electrode assembly (MEA)
- 5: Electrolyte membrane
- 6: Electrode
- 7: Gas diffusion layer
- 10: Fuel cell
- 21, 22: Gas flow channels

## Claims

1. A membrane electrode assembly comprising:
a polymer electrolyte membrane;
an anode catalyst layer disposed on one surface of the polymer electrolyte membrane; and
a cathode catalyst layer disposed on the other surface of the polymer electrolyte membrane,
wherein the membrane electrode assembly contains a nitrogen-containing multidentate ligand capable of coordinating to metal ions,
wherein the cathode catalyst layer includes an electrode catalyst and an ionomer,
wherein the electrode catalyst is a metal-supported catalyst in which metal particles having catalytic activity are supported on a support having pores, and
wherein, when metal particles present on outermost surfaces of primary particles of the support are external particles, and metal particles present inside the outermost surfaces of the primary particles of the support are internal particles, a ratio of a total surface area of the external particles to a total surface area of the internal particles (total surface area of external particles/total surface area of internal particles) is 1.20 or less.

2. A membrane electrode assembly comprising:
a polymer electrolyte membrane;
an anode catalyst layer disposed on one surface of the polymer electrolyte membrane; and
a cathode catalyst layer disposed on the other surface of the polymer electrolyte membrane,
wherein the membrane electrode assembly contains a nitrogen-containing multidentate ligand capable of coordinating to metal ions,
wherein the cathode catalyst layer includes an electrode catalyst and an ionomer,
wherein the electrode catalyst is a metal-supported catalyst in which metal particles having catalytic activity are supported on a support having pores, and
wherein, when metal particles present on outermost surfaces of primary particles of the support are external particles, and metal particles present inside the outermost surfaces of the primary particles of the support are internal particles, a ratio of a total particle count of the external particles to a total particle count of the internal particles (total particle count of external particles/total particle count of internal particles) is 0.70 or less.

3. The membrane electrode assembly according to claim 1,
wherein a ratio of a total particle count of the external particles to a total particle count of the internal particles (total particle count of external particles/total particle count of internal particles) in the electrode catalyst is 0.70 or less.

4. The membrane electrode assembly according to any one of claims 1 to 3,
wherein the nitrogen-containing multidentate ligand capable of coordinating to the metal ions is at least one selected from compounds represented by the following general formulae (1) to (4) and salts thereof, 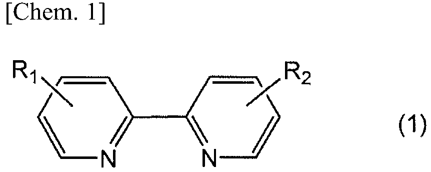 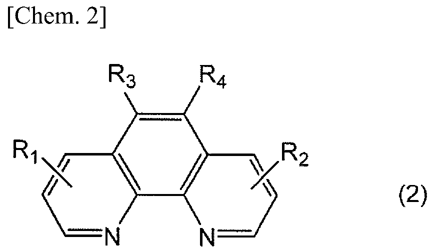 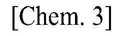 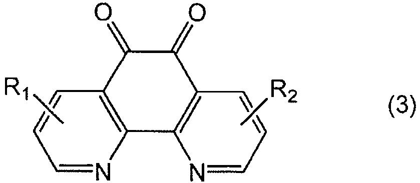 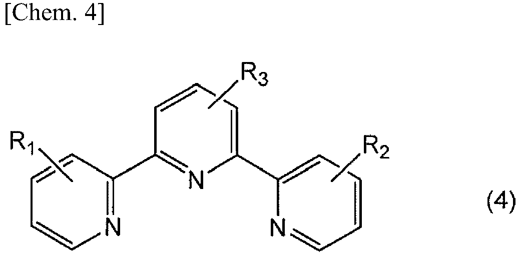
wherein each of R¹, R², R³ and R⁴ is one functional group selected from a group of functional groups consisting of a hydrogen atom, a halogen atom, a nitrile group, an amido group, an imine group, an amino group, a thiol group, a hydroxyl group, a sulfo group, a carboxylic acid group, a phosphonic acid group, a phosphoric acid group, a ketone group, an aldehyde group, an ester group, an alkoxy group, a haloalkoxy group, a phenol group, a cyclopentyl group, a cyclohexyl group, an alkylamino group having 1 to 10 carbon atoms, an alkylsulfonic acid group having 1 to 10 carbon atoms, a haloalkyl group having 1 to 10 carbon atoms, an alkyl group having 1 to 10 carbon atoms, an alkenylamino group having 2 to 10 carbon atoms, an alkenylsulfonic acid group having 2 to 10 carbon atoms, a haloalkenyl group having 2 to 10 carbon atoms and an alkenyl group having 2 to 10 carbon atoms, and each of the functional groups optionally has, in a molecular chain, at least one selected from a group consisting of at least one functional group selected from the group of functional groups as defined above, an aromatic ring, a heterocyclic ring, an oxygen atom, a sulfur atom and a nitrogen atom.

5. The membrane electrode assembly according to any one of claims 1 to 4,
wherein the metal particles are at least one selected from a group consisting of platinum particles, platinum alloy particles, and composite particles containing platinum.
